# EUROPEAN PATENT APPLICATION

(11) **EP 1 661 659 A1**
(43) Date of publication of application: **31.05.2006**
(21) Application number: 04106166.4
(22) Date of filing: 29.11.2004
(51) Int. Cl.: B23K 37/04, B23Q 1/25, F16M 11/06

(54) **Swing-over assembly**

(71) Applicant: P.M.C. Tecnologie S.r.l., 10095 Grugliasco (IT)
(72) Inventor: Novarino, Guido, I-10095 Grugliasco (IT); Novarino, Giovanni, I-10095 Grugliasco (IT)
(74) Representative: Jorio, Paolo

(57) **Abstract**

A swing-over assembly (1) has a supporting body (2), to which is hinged a swing-over connecting member (5); in use, the connecting member (5) rotates between a rest position and a work position under the control of a transmission (14), which transmits rotation from an electric motor (10) and has a worm-and-helical-gear reducer (16) and a torque limiter (28).

## Description

The present invention relates to a swing-over assembly comprising an oscillating member for rotating tools and/or work fixtures between a rest position and a work position about a hinge axis.

In known swing-over assemblies, the oscillating member is defined by a plate for connecting the tool or fixture, is hinged to a supporting body, and is rotated between the work position and the rest position by a pneumatic cylinder with the interposition of a lever transmission housed inside the supporting body.

More specifically, the rod of the pneumatic cylinder extends perpendicularly to the hinge axis, and slides inside a sleeve connected at one end to the supporting body, and at the opposite end to a hydraulic device for controlling and braking the rod.

Known solutions of the type described above are unsatisfactory by being relatively bulky, especially along the pneumatic cylinder axis, on account of the extension and travel of the rod and the presence of the hydraulic device at the end of the sleeve. Moreover, the starting torque of the connecting plate is relatively low, on account of the very small lever arm of the lever transmission between the rod and the hinge axis. Despite attempts to eliminate this drawback by employing high-thrust cylinders, start-up operation of known swing-over assemblies still remains unsatisfactory, on account of sudden, fast initial rotation of the oscillating member, which constitutes a hazard both to the equipment and anyone working in the vicinity of the assembly.

It is an object of the present invention to provide a swing-over assembly designed to provide a straightforward, low-cost solution to the aforementioned drawbacks.

According to the present invention, there is provided a swing-over assembly comprising:
- a supporting body;
- a swing-over connecting member hinged to said supporting body about a hinge axis to rotate between a rest position and a work position; and
- transmission means for transmitting motion from an actuator to said connecting member to rotate said connecting member between said rest position and said work position;
characterized in that said transmission means comprise a worm-and-helical-gear transmission.

A non-limiting embodiment of the invention will be described by way of example with reference to the accompanying drawings, in which:
Figure 1 shows a view in perspective of a preferred embodiment of the swing-over assembly according to the present invention;
Figure 2 shows a schematic side view of the Figure 1 swing-over assembly.

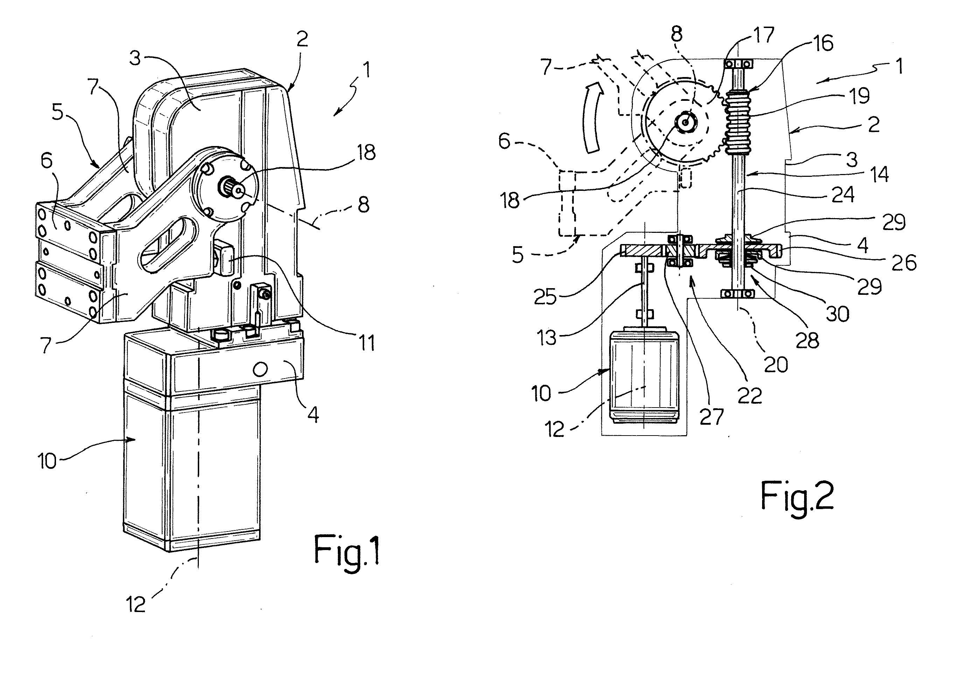

Number 1 in Figure 1 indicates a swing-over assembly comprising a supporting body 2, in turn comprising a top portion 3 and a bottom portion 4 connected integrally to each other.

Assembly 1 also comprises a substantially U-shaped oscillating member 5, in turn comprising an end connecting plate 6 for attaching a swing-over tool or fixture (not shown), and two arms 7 fixed at one end to plate 6 and hinged at the opposite end to portion 3 about an axis 8 extending, in use, in a horizontal direction.

Member 5 is swung over between a rest position and a work position by an actuator 10, and performs a maximum angular travel of approximately 120° defined by stops 11 (shown partly) fixed to and projecting from portion 3. Actuator 10 is defined by an electric motor connected integrally to portion 4 and located partly beneath member 5, substantially aligned with axis 8 along an axis 12 perpendicular to axis 8.

Motor 10 comprises an output shaft 13 extending along axis 12 and which, when rotated, activates member 5 via the interposition of a transmission 14 housed inside body 2.

Transmission 14 comprises a worm-and-helical-gear speed reducer 16 housed inside portion 3 and in turn comprising a helical gear 17, connected to arms 7 in a fixed angular position about axis 8 by a splined-shaft coupling 18, and a worm 19 having an axis 20 parallel to axis 12.

Transmission 14 also comprises a gear assembly 22, which is interposed between shaft 13 and the shaft 24 of worm 19, is housed inside portion 4, and in turn comprises a drive gear 25 fitted in a fixed position to shaft 13, a driven gear 26, and an intermediate transmission gear 27, which rotates idly with respect to portion 4 and transmits motion from gear 25 to gear 26.

To vary the transmission ratio of assembly 22, gears 27 and 25 may be replaced with other gears of different diameters, while still maintaining the same distance between the axes of shafts 13 and 24.

Transmission 14 also comprises a torque limiter 28 connecting gear 26 to shaft 24 and, in the example shown, comprising two friction disks 29 forced axially, with an adjustable load, against gear 26 by a ring nut 30. Disks 29 are fitted in fixed angular positions to shaft 24, and slide on gear 26 when member 5 encounters a predetermined resisting torque, e.g. at the stops.

In actual use, motor 10, transmission 14, and, in particular, reducer 16 produce a relatively high torque to rotate member 5, even at start-up, while still maintaining a compact assembly 1 along axis 20, as compared with known solutions featuring pneumatic actuating cylinders.

At the same time, start-up rotation of member 5 is slower, thus preventing damage to the equipment or injury to anyone working in the vicinity of assembly 1.

Torque limiter 28, on the one hand, is relatively straightforward and inexpensive, as compared with other systems for braking and controlling the rotation speed of member 5, and, on the other, ensures a high degree of safety of assembly 1, in the event member 5 encounters an obstacle as it rotates between the rest and work positions.

Splined-shaft coupling 18 provides for relatively easy assembly of the component parts of assembly 1, while assembly 22 provides for further reducing the transmission ratio of transmission 14, and for adjusting the transmission ratio by changing gears 27 and 25.

Clearly, changes may be made to assembly 1 without, however, departing from the scope of the present invention.

In particular, worm 19 may be oriented otherwise than as shown, and/or connection and transmission systems other than coupling 18 may be provided between helical gear 17 and member 5.

Torque limiter 28 may be other than as described by way of example, and/or may be located elsewhere, e.g. interposed between helical gear 17 and member 5.

Moreover, portions 3 and 4 of body 2 may be formed in one piece; shafts 13 and 24 may be coaxial; and/or assembly 22 may be dispensed with or replaced by a different transmission.

## Claims

1. A swing-over (1) assembly comprising:
- a supporting body (2);
- a swing-over connecting member (5) hinged to said supporting body (2) about a hinge axis (8) to rotate between a rest position and a work position; and
- transmission means (14) for transmitting motion from an actuator (10) to said connecting member (5) to rotate said connecting member (5) between said rest position and said work position;
**characterized in that** said transmission means (14) comprise a worm-and-helical-gear transmission (16).

2. An assembly as claimed in Claim 1, **characterized in that** said transmission (16) comprises a helical gear (17) rotating with respect to said supporting body (2) about a respective axis coincident with said hinge axis (8) .

3. An assembly as claimed in Claim 1 or 2, **characterized in that** said transmission (16) comprises a worm (19) having an axis (20) perpendicular to said hinge axis (8).

4. An assembly as claimed in any one of the foregoing Claims, **characterized in that** said transmission means (14) also comprise a torque limiter (28).

5. An assembly as claimed in Claim 4, **characterized in that** said torque limiter (28) is carried by the worm (19) of said transmission (16).

6. An assembly as claimed in Claim 5, **characterized by** comprising a splined-shaft coupling (18) for keeping the helical gear (17) of said transmission (16) and said connecting member (5) in a fixed angular position with respect to each other about said hinge axis.

7. An assembly as claimed in any one of Claims 4 to 6, **characterized in that** said transmission means (14) also comprise at least two gears (22) meshing with each other to transmit rotation from said actuator (10) to the worm (19) of said transmission (16).

8. An assembly as claimed in Claim 7, **characterized in that** said transmission means (14) comprise a drive gear (25), a driven gear (26), and an idle transmission gear (27) interposed between said drive gear and said driven gear (25, 26).

9. An assembly as claimed in Claim 8, **characterized in that** said drive gear and said idle gear (25, 27) can be replaced by gears of different diameters to vary the transmission ratio of said transmission means (14).

10. An assembly as claimed in any one of the foregoing Claims, **characterized by** comprising said actuator (10); said actuator being defined by an electric motor fitted to said supporting body (2).

11. An assembly as claimed in any one of the foregoing Claims, **characterized in that** said transmission means (14) are housed in said supporting body (2).
